# EUROPÄISCHE PATENTSCHRIFT

(11) **EP 0 744 225 B1**
(45) Veröffentlichungstag und Bekanntmachung des Hinweises auf die Patenterteilung: **20.10.1999**
(21) Anmeldenummer: 96107775.7
(22) Anmeldetag: 15.05.1996
(51) Int. Cl.: B09B 3/00

(54) **Verfahren zur Entsorgung von Perlite**
Method for disposal of perlite
Procédé pour l'élimination de la perlite

(30) Priorität: 22.05.1995 DE 19518749
(43) Veröffentlichungstag der Anmeldung: 27.11.1996
(73) Patentinhaber: Linde Aktiengesellschaft, 65189 Wiesbaden (DE)
(72) Erfinder: Beck, Franz, 85716 Unterschleissheim (DE); Kunde, Frank, Dr.-Ing., 82515 Wolfratshausen (DE)
(74) Vertreter: Imhof, Dietmar

(56) Entgegenhaltungen:
- PATENT ABSTRACTS OF JAPAN vol. 12, no. 117 (C-487), 13.April 1988 & JP-A-62 241590 (MITSUI CONSTR.), 22.Oktober 1987,

## Beschreibung

Die Erfindung betrifft ein Verfahren zur Entsorgung von Perlite.

Perlite entsteht durch Expansion von vulkanischem Gestein und stellt ein hochporöses Material in Teilchenform dar. Hauptanwendungsgebiet ist die thermische Isolierung von Apparaten wie zum Beispiel Tanks zur Aufnahme verflüssigter tiefkalter Gase oder ganzer Teile von Tieftemperaturanlagen. Deren Hülle oder Mantel wird mit einer Schüttung aus Perlite-Teilchen gefüllt (Hause/Linde, Tieftemperaturtechnik, Springer-Verlag 1985, Kapitel 9.5.1 und 9.6). Bei der Entsorgung solcher Bauelemente wird Perlite bisher in Säcke abgefüllt und anschließend auf einer geeigneten Deponie gelagert.

Das bekannte Verfahren hat den Nachteil, daß es zum einen sehr aufwendig und damit kostenintensiv ist und daß das in Säcke abgefüllte Perlite zum anderen als Sondermüll gelagert werden muß. Außerdem Ist es im Rahmen der Umweltdiskussion immer schwieriger, Deponien zu finden, die das so konditionierte Perlite abnehmen.

Außerdem ist aus der in "Patent Abstracts of Japan" veröffentlichten Zusammenfassung von JP-A-62/241590 bekannt, Perlite mit Zement und Wasser zu vermischen und anschließend zu verpressen.

Der Erfindung liegt die Aufgabe zugrunde, ein Verfahren zur Entsorgung von Perlite zu entwickeln, das relativ kostengünstig und dabei möglichst umweltverträglich ist.

Diese Aufgabe wird durch die Merkmale des Patentanspruchs 1 gelöst. Eine weitere Ausgestaltung der Erfindung ist dem Patentanspruch 2 zu entnehmen.

In der Praxis wird Perlite mittels eines Gebläses aus dem zu entsorgenden Behälter abgesaugt, in einer Mischkammer mit Brauchwasser vermischt. Das Perlite-Wasser-Gemisch wird in eine Preßkammer eingebracht und dort zu Blöcken verpreßt. Dabei wird das Perlite unter einem Druck von 20 bis 500 bar, vorzugsweise 150 bis 200 bar, höchst vorzugsweise etwa 200 bar auf ca. ein Drittel bis ein Fünftel seines ursprünglichen Volumens reduziert und außerdem staubfrei konditioniert. Damit gelingt es, mittels eines einfachen und damit kostengünstigen Verfahrens Perlite in eine Form zu bringen, die eine relativ problemlose Lagerung auf Deponien, insbesondere auf gewöhnlichen Bauschuttdeponien, ermöglicht. Sowohl die Staubfreiheit des verpreßten Perlites als auch die erhebliche Volumenreduzierung verringern die Deponierkosten um ein Vielfaches.

Bei ersten Versuchen zur staubfreien Konditionierung von Perlite wurde das zu entsorgende Gut mit Bindemitteln (Kalkschlamm, H₂SO₄, Natronwasserglas) vermischt. Diese Maßnahme brachte brauchbare, jedoch nicht vollständig zufriedenstellende Ergebnisse. Im Rahmen der Erfindung hat sich jedoch herausgestellt, daß es überraschenderweise keiner besonderen Bindemittel bedarf, sondern daß die Zugabe von Wasser bei anschließender Verpressung ausreicht, um die gewünschte Staubfreiheit zu realisieren. Zusätzlich ergibt sich bei der Erfindung die bereits genannte Volumenreduzierung.

Die Größe der Blöcke hängt von der verwendeten Preßmaschine ab. In einer Versuchsanordnung wurden Blöcke in Form von Zylindern mit Durchmesser 220 mm und Höhe 250 mm gepreßt.

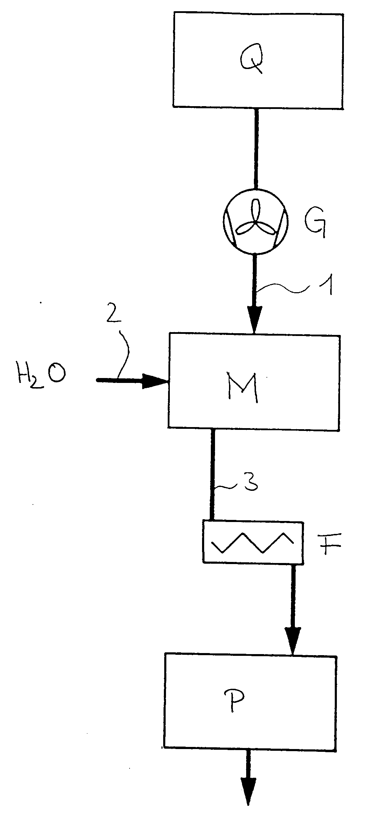

Die Erfindung sowie weitere Einzelheiten der Erfindung werden im folgenden anhand eines in der Zeichnung schematisch dargestellten Ausführungsbeispiels näher erläutert.

Aus einer Quelle Q für zu entsorgendes Perlite, beispielsweise der Vakuumisolierung eines Speichertanks oder der Cold box einer Tieftemperaturanlage, wird mittels eines Gebläses G Perlite abgesaugt und über Leitung 1 einer Mischkammer M zugeführt. Die Mischkammer M wird außerdem mit Wasser beschickt (Leitung 2). Das Gewichtsverhältnis Wasser/Perlite beträgt beispielsweise 1/3 bis 1/30, vorzugsweise 1/10 bis 1/15, höchst vorzugsweise etwa 1/10. Die Zuführung anderer Stoffe, insbesondere von Bindemitteln, ist nicht notwendig. Im Gegenteil, vorzugsweise wird Wasser mit einem Gehalt an Bindemitteln von weniger als etwa 1 Gew-% an Bindemitteln, höchst vorzugsweise vollständig bindemittelfreies Wasser verwendet. Zum Beispiel eignet sich unbehandeltes Brauch- oder Leitungswasser für das erfindungsgemäße Verfahren.

Das Perlite-Wasser-Gemisch 3 aus der Mischkammer M wird mit Hilfe einer Förderschnecke in eine Preßkammer P geleitet und dort zu Blöcken gepreßt.

## Patentansprüche

1. Verfahren zur Entsorgung von Perlite, bei dem Perlite mit Wasser, das einen Gehalt an Bindemitteln von weniger als etwa 1 Gew-% aufweist oder vollständig bindemittelfrei ist, vermischt und unter einem Druck von 20 bis 500 bar verpreßt wird.

2. Verfahren nach Anspruch 1, wobei das Volumen des Perlites beim Verpressen auf etwa ein Drittel bis ein Fünftel des Ausgangsvolumens reduziert wird.

## Claims

1. Process for disposing of perlite, in which the perlite is mixed with water that has a content of binders less than about 1% by weight or is completely binder-free and is pressed at a pressure of from 20 to 500 bar.

2. Process according to Claim 1, wherein the volume of the perlite is reduced during pressing to about one third to one fifth of the starting volume.

## Revendications

1. Procédé pour l'élimination de la perlite, dans lequel de la perlite est mélangée avec de l'eau qui présente une teneur en liants inférieure à environ 1% en poids ou qui ne contient absolument aucun liant et est compactée à une pression de 20 jusqu'à 500 bars.

2. Procédé suivant la revendication 1, dans lequel le volume de la perlite est réduit à environ un tiers jusqu'à un cinquième du volume de départ lors du compactage.
